# EUROPEAN PATENT APPLICATION

(11) **EP 4 538 983 A1**
(43) Date of publication of application: **16.04.2025**
(21) Application number: 24205312.2
(22) Date of filing: 08.10.2024
(51) Int. Cl.: G06T 19/20, G06T 7/30

(54) **SYSTEM AND METHOD FOR IMPROVING THE ACCURACY OF A 3D REPRESENTATION**

(30) Priority: 12.10.2023 DK PA202370531
(71) Applicant: 3Shape A/S, 1060 Copenhagen K (DK)
(72) Inventor: HOEDT, Asger Vejen, 1060 Copenhagen K (DK)
(74) Representative: Guardian IP Consulting I/S

(57) **Abstract**

The present disclosure relates to a computer-implemented method for improving the accuracy of a three-dimensional (3D) representation of a jaw, the method comprising the steps of: obtaining a first digital 3D representation of at least a part of a first jaw, such as a lower jaw of a patient; obtaining a second digital 3D representation of at least a part of a second jaw, such as an upper jaw of the patient; obtaining one or more third digital 3D representations of the first and second jaws in occlusion, wherein the third digital 3D representation(s) have been generated by combining several 3D frames generated for a number of different views of the jaws in occlusion, wherein each 3D frame comprises data expressing the geometry of at least a part of the jaws in occlusion; and correcting the first digital 3D representation by adjusting the position and/or orientation of one or more surface points and/or vertices belonging to the first digital 3D representation relative to other surface points and/or vertices belonging to the first digital 3D representation based on the position of 3D frames associated with the third digital 3D representation, whereby the accuracy of the first digital 3D representation is improved. The present disclosure further relates to a 3D scanner system configured for carrying out the steps of the method.

## Description

### Technical field

The present disclosure relates to a computer-implemented method for improving the accuracy of a three-dimensional (3D) representation. The present disclosure further relates to a 3D scanner system comprising one or more processors configured for performing the steps of the method disclosed herein.

### Background

3D scanning technology is widely used in dentistry for creating a digital impression of teeth. This technology enables dentists to obtain a detailed and accurate representation of the teeth in a digital format, which can then be used for a variety of applications, including the design and fabrication of dental restorations, orthodontic appliances, and other dental prostheses.

The digital impression of the teeth is typically acquired in a sequence of steps, said sequence typically including a step wherein first the lower jaw of the patient is scanned, then the upper jaw is scanned, and in a final step the jaws are scanned in occlusion. The latter step is sometimes also referred to as a bite scan. The bite scan is oftentimes acquired in both sides of the mouth.

There is a need for improved methods and systems that are able to capture the digital impression of the teeth more accurately. In particular, there is a desire to develop a system and method that is able to generate a more accurate digital 3D representation, since this will facilitate better treatments for the patient, e.g. in terms of orthodontics or restorations.

### Summary

Naturally, when acquiring a 3D scan of the patient's dentition in either the lower or upper jaw, the patient has to open his or her mouth. The present inventors have realized that a problem associated herewith is that the jaw, in particular the lower jaw, is not entirely rigid; it may deform to some extent. Thus, the width of the jaw may differ in the two situations, i.e. between the open position and the closed position, where the jaws are in natural occlusion.

Since the patient has to open the mouth when the 3D scan of the lower and upper jaw is acquired, and then close the mouth, when the bite scan is acquired, there is a risk that the upper and lower jaw will be misaligned, due to the slight deformation of the lower jaw. The misalignments can cause undesired intersections in the final 3D model, i.e. such that teeth in the upper jaw intersect teeth in the lower jaw. The misalignments may also or alternatively cause undesired gaps between the upper and lower jaw. This may consequently lead to inaccurate restorations for the patient, e.g., a dental crown may in that case be designed too large or tall.

In current 3D scanning systems and methods, the jaws of the patient are treated as being rigid. Therefore, once the 3D model has been generated, the upper and lower jaws are defined as static in the model, i.e. with no modeling of the deformation. Thus, when the bite scans are acquired to determine the natural occlusion of the patient, the two 3D scans of the jaws are forced together as static objects. This can cause the aforementioned misalignment(s) and/or undesired intersections, and consequently lead to an inaccurate digital 3D model of the patient's teeth.

The presently disclosed system and method addresses these challenges by modifying or correcting the digital 3D representation of any of the two jaws, wherein the modification or correction is based on information from the bite scans, i.e. from the 3D representation(s) of the patient's teeth in occlusion. Accordingly, the present disclosure relates to a computer-implemented method for improving the accuracy of a three-dimensional (3D) representation of a jaw, the method comprising the steps of:
- obtaining a first digital 3D representation of at least a part of a first jaw, such as a lower jaw of a patient, wherein the first digital 3D representation comprises a plurality of surface points and/or a plurality vertices;
- obtaining a second digital 3D representation of at least a part of a second jaw, such as an upper jaw of the patient, wherein the second digital 3D representation comprises a plurality of surface points and/or one or more vertices, wherein the second jaw is located opposite to the first jaw;
- obtaining one or more third digital 3D representations of the first and second jaws in occlusion, wherein the third digital 3D representation(s) have been generated by combining several 3D frames generated for a number of different views of the jaws in occlusion, wherein each 3D frame comprises data expressing the geometry of at least a part of the jaws in occlusion; and
- correcting the first digital 3D representation by adjusting the position and/or orientation of one or more surface points and/or vertices belonging to the first digital 3D representation relative to other surface points and/or vertices belonging to the first digital 3D representation;
wherein the correction is performed based on the position of 3D frames associated with the third digital 3D representation, whereby the accuracy of the first digital 3D representation is improved.

The present disclosure further relates to a 3D scanner system for correcting a three-dimensional (3D) representation of a jaw, the scanner system comprising one or more processors configured for performing the steps of any of the methods disclosed herein.

The present disclosure further relates to a data processing system, such as the 3D scanner system disclosed herein, comprising one or more processors configured to perform one or more of the steps of the computer-implemented method disclosed herein.

The present disclosure further relates to a computer program product comprising instructions which, when the program is executed by a computer, cause the computer to carry out the steps of the method disclosed herein. The present disclosure further relates to a computer-readable data carrier having stored thereon said computer program product.

The present disclosure further relates to a computer-readable storage medium comprising instructions which, when executed by a computer, cause the computer to carry out the steps of the method disclosed herein.

### Brief description of the drawings

Fig. 1 shows a flowchart according to an embodiment of the computer-implemented method disclosed herein.
Fig. 2 shows an embodiment of a 3D scanner system according to the present disclosure.
Fig. 3 shows a flowchart according to an embodiment of the computer-implemented method disclosed herein.
Fig. 4 shows a computer system in which embodiments of the present disclosure, or portions thereof, may be implemented as computer-readable code.

### Detailed description

### 3D representation

A 3D representation may be understood herein as a digital representation of a three-dimensional object's external geometry and shape. The 3D representation may represent only a part of the object's geometry and shape. The 3D representation may comprise a collection of points and/or polygons that collectively define the object's surface. As an example, the 3D representation may be selected from the group of: a point cloud, a signed distance field, a triangulated point cloud, a collection of point clouds optionally with additional information such as uncertainty estimates or color(s), a collection of triangulated point clouds, a polygon mesh, a volumetric representation such as a voxel model, a parametrized surface, a surface elements model, or any other suitable three-dimensional representational model. In the 3D representation, each point may be defined by its three-dimensional coordinates (x, y, z) in a Cartesian coordinate system. The points may form part of a surface mesh, such as a polygon mesh. In some embodiments, the 3D representation is a triangle mesh comprising a set of triangles connected by their common edges or vertices. The collection of points and/or the surface mesh may be used to create a visual representation of the object, which can be rendered on a computer screen.

The 3D representation may be generated from a plurality of 3D frames. A 3D frame may be understood herein as a 3D representation generated from a single field of view of an intraoral scanner. In other words, a 3D frame may in itself constitute a 3D representation of a part of the scanned object's surface, and thus may fall within the examples of 3D representations given above. As an example, each 3D frame may constitute a point cloud having a plurality of points in three-dimensional space. During a scan, the scanner may acquire 3D frames at a given frame rate, such as between 20 to 35 frames per second. The 3D frames may be registered in a common reference system and stitched together to form a 3D representation, which is larger than what can be captured in a single field of view of the scanner. Registration of 3D frames may include registering a 3D frame to one or more previously captured 3D frames of the object. Registration of a 3D frame may be understood as determining the position and/or the orientation of the 3D frame relative to another object and/or collection of objects (such as a collection of 3D frames). The registration may further include the actual positioning of the 3D frame relative to the collection of objects and/or collection of 3D frames. A collection of 3D frames stitched together may constitute the digital 3D representation described herein above. The 3D representation, e.g., of a given jaw or of a part of the dental arch, may be composed from a large number of 3D frames, such as between 100 and 2500 frames. Other amounts of 3D frames can be envisioned without departing from the scope of the disclosure.

### 3D scanner system

The present disclosure further relates to a 3D scanner system for correcting, and/or improving the accuracy of, a three-dimensional (3D) representation of a jaw. The scanner system may comprise one or more processors configured for performing one or more steps of any of the methods disclosed herein. The processors may be selected from the group of: central processing units (CPU), accelerators (offload engines), general-purpose microprocessors, graphics processing units (GPU), neural processing units (NPU), application-specific integrated circuits (ASIC), field-programmable gate arrays (FPGA), dedicated logic circuitry, dedicated artificial intelligence processor units, or combinations thereof. The one or more processors may be operatively connected to an intraoral scanner forming part of the 3D scanner system. Some of the processors may be located on the intraoral scanner and some of the processors may be located on a computer forming part of the 3D scanner system. The intraoral scanner may be a handheld intraoral scanner.

The 3D scanner system may further comprise computer memory for storing instructions, which when executed, causes the processor(s) to perform any of the disclosed computer-implemented methods herein, either fully or in part, e.g. such that some processor(s) perform some method steps and other processors perform other method steps, when executed. In some embodiments, the 3D scanner system comprises computer memory for storing instructions, which when executed, causes the processor(s) to carry out the step of correcting the first and/or second digital 3D representation, wherein said correction step is performed by changing the position and/or orientation of one or more 3D frames associated with the first and/or second digital 3D representation and/or by adjusting the position and/or orientation of one or more vertices belonging to the first and/or second digital 3D representation.

In some embodiments, the intraoral scanner is based on mechanical confocal scanning, wherein an optical element, such as a lens, is configured to mechanically move back and forth to scan a volume during scanning, while projected light is spatially filtered in a detector plane. In some embodiments, the intraoral scanner is based on chromatic confocal scanning, wherein a volume is scanned by illuminating light through a highly chromatic material and changing the scanning wavelength, while projected light is spatially filtered in the detector plane.

In some embodiments, the intraoral scanner is based on a focus scanning principle, such as depth-from-focus. In such embodiments, the scanner comprises an optical element, such as a focus lens, which is configured to move back and forth during scanning to change the focus of the scanner, whereby the depth can be estimated based on a focus measure. A focus scanner is further described in EP 2 442 720 B1 by the same applicant, which is hereby incorporated herein by reference. In some embodiments, the intraoral scanner is based on a depth-from-defocus scanning principle, wherein an optical property, such as an aperture, is changed between the acquisition of two images, whereby depth can be estimated by determining the degree of defocus between the two images.

In some embodiments, the intraoral scanner is based on triangulation, wherein at least one camera and a projector unit are positioned such that they form a triangle with respect to a point on the scanned surface. As an example, a projector and a camera may be utilized to determine points in 3D space based on triangulation. Alternatively, the intraoral scanner may comprise two or more cameras viewing the scene or scanned object from two different directions, wherein the cameras are configured to acquire a set of images, wherein a correspondence problem is solved based on triangulation. The correspondence problem generally refers to the problem of ascertaining which parts of one image correspond to which parts of another image. Specifically, the projector unit may be configured to project a plurality of projector rays, which are projected onto a surface of the dental object. In particular, solving the correspondence problem may include the steps of determining image features in the images within a set of images, and further associate said image features with a specific projector ray.

Subsequently, the depth of each projector ray may be computed, whereby a 3D representation of the scanned object may be generated.

### Method outlined

A first step of the method may be to obtain a first digital 3D representation of at least a part of a first jaw, such as a lower or upper jaw of a patient. The digital 3D representation may be obtained using an intraoral scanner. Alternatively, it may be obtained from a database, such as a database forming part of the disclosed 3D scanner system, or from an external database. Typically, when acquiring a digital impression of a patient's dentition, the lower jaw is scanned first; however, in other cases the upper jaw is scanned first. The presently disclosed system and method works regardless of the order of which the two jaws are scanned, i.e., regardless of whether the first 3D representation is of the lower jaw or the upper jaw. The digital 3D representation of the first jaw may be acquired in many steps in succession.

Any of the first or second jaw may include the patient's dentition, gingiva, edentulous ridges, retromolar trigone, hard palate, soft palate, and floor of the mouth, etc. Other parts or dental objects can be represented in the first digital 3D representation of the first or second jaw, such as dental fillings, restorations, preparation sites, implants, etc. Any of the first or second 3D representations may fall within any of the definitions and examples of 3D representations provided herein. Thus, any of the first, second, and/or third digital 3D representation may comprise a plurality of 3D frames as described herein. The 3D frames may be registered in a common coordinate system. Any of the first, second, and/or third digital 3D representations may be generated by registering and/or stitching several 3D frames together, wherein the 3D frames have been acquired or generated for a number of different views of the jaw. The method may comprise the step of subsequently, i.e., after registration, translating and/or rotating one or more 3D frames in a post-processing step, whereby the accuracy of the 3D representation is improved.

A second step of the computer-implemented method may be to obtain a second digital 3D representation of at least a part of a second jaw, such as a lower or upper jaw of a patient. The second jaw should be understood as a jaw located opposite the first jaw in the mouth of the patient. As an example, if the first jaw is the lower jaw, then the second jaw should be the upper jaw, and vice versa. The digital 3D representation of the second jaw may be acquired in many steps in succession. As an example, the intraoral scanner may be stopped or paused a number of times during a given scanning session, wherein the first or second digital 3D representations are acquired or generated by the 3D scanner system. The first and second digital 3D representations may be generated using the same intraoral scanner or using two different intraoral scanners, and they may be acquired or generated in succession, e.g., one after the other during a patient visit. Alternatively, the first and/or second 3D representations may be obtained from a database. Depending on the type of workflow, the first and/or second digital 3D representations may include one or more dental objects, such as the patient's dentition, but also dental fillings, restorations, preparation sites, implants, or other objects related to dentistry. Oftentimes, the workflow is outlined in a scanner software application running on a computer system forming part of the 3D scanner system. A typical workflow for creating a digital impression of the dentition is to scan the lower jaw first, then the upper jaw, and finally the jaws in occlusion, the latter step sometimes also referred to as bite scans. However, as previously mentioned, the specific order may vary and the disclosed system and method is invariant to the order of the steps.

A third step of the method may be to obtain one or more third digital 3D representations of the first and second jaws in occlusion, wherein the third digital 3D representation(s) have been generated by combining several 3D frames generated for a number of different views of the jaws in occlusion. In this case, each 3D frame of the third digital 3D representation preferably comprises data expressing the geometry of at least a part of the jaws in occlusion. Acquisition of 3D data of the jaws in occlusion is sometimes also referred to as bite scans. One or more bite scans may be acquired, such as one or more bite scans in each side of the mouth. This step is important to determine how the generated digital 3D representations of the jaws fit in occlusion in accordance with the natural bite of the patient. An accurate bite scan will generally improve the accuracy of the combined first and second 3D representations, sometimes also referred to as the digital 3D model, such that e.g., a restoration will fit better in the patient's mouth when the jaws are occluded.

The present inventors have realized that even though 3D scanners today are quite precise and accurate, no existing 3D scanner systems take into account the deformity of the jaw(s), in particular the deformity of the lower jaw. This is a problem, because the geometry of the jaw may change slightly between the open and closed position of the jaw. As an example, the width of the lower jaw may be more narrow in the open position compared to when the jaws are in occlusion. The width of the jaw may be understood herein as the intermolar width, which may be understood as the distance between the mesiobuccal cusp tips of the right and left maxillary and mandibular first molars. This distance may vary among humans, but typical values range from 45 mm to 55 mm. Since the 3D representation of the lower jaw is acquired when the patient opens the mouth, said representation may not accurately depict the lower jaw in occlusion with the upper jaw. The aforementioned difference, e.g., in terms of width, may negatively impact the accuracy of the combined digital 3D model, i.e. the two 3D representations in their common reference system. As an example, the difference in intermolar width between the open and closed position may be between 0.1 mm to 1 mm, such as approximately 0.5 mm, which is enough to negatively impact the accuracy of the 3D model.

Therefore, the presently disclosed system and method preferably comprises a step of correcting the first and/or second digital 3D representation by changing the position and/or orientation of one or more 3D frames associated with the first digital 3D representation based on the position of 3D frames associated with the third digital 3D representation, whereby the accuracy of the first digital 3D representation is improved. Accordingly, a plurality of 3D frames, such as all 3D frames, associated with the first digital 3D representation may be corrected based on the position of 3D frames associated with the third digital 3D representation(s). In an alternative to modifying the position and/or orientation of one or more 3D frames, the method may comprise the step of changing the position of one or more 3D surface points forming part of the first and/or second digital 3D representation. In some embodiments, the 3D representations are surface models, such as mesh models. In that case, the correction may comprise warping the surface model, e.g., warping the mesh by changing the position of one or more 3D surface points and/or vertices forming part of the 3D representation. In other cases, the surface of the first or second 3D representation is completely rebuilt from the corrected 3D frames.

Since the third digital 3D representation(s), i.e., the bite scan(s), are acquired and generated during occlusion of the jaws, the third digital 3D representation(s) may be utilized to correct any of the first and/or second digital 3D representation; in particular the representation representing the lower jaw. Thus, the method may comprise an optimization step in which the position and/or orientation of 3D frames of the first or second digital 3D representation is adjusted based on information of the 3D frames belonging to the bite scan(s), i.e., the third digital 3D representation(s). Alternatively, the first or second digital 3D representation may be adjusted directly, e.g. by adjusting or warping the surface of the 3D representation, such as by adjusting the position and/or orientation of one or more vertices of the 3D representation, e.g. embodied as a surface mesh model.

The optimization step may be performed as a post-processing step, i.e., after the first, second, and third 3D representations have been generated. The upper jaw may, to a good approximation, be considered static, i.e., without the ability to deform between the open and closed position of the mouth. Therefore, in the optimization step, the digital 3D representation of the upper jaw is preferably fixed such that 3D frames associated with this representation remains in their original location. Accordingly, the second digital 3D representation may be static, such that 3D frames associated with the second digital 3D representation are fixed in space. Conversely, 3D frames belonging to the digital 3D representation of the lower jaw may be free to move, e.g., the position and/or orientation may be changed in accordance with a Euclidean transformation. In other embodiments, one or more 3D frames forming part of the representation of the lower jaw are skewed or scaled in accordance with one or more predefined transformations.

In some embodiments, the position and/or correction of 3D frames from different 3D representations are weighted differently when performing the correction of the first digital 3D representation. As an example, the position of 3D frames associated with the third digital 3D representation, i.e., 3D frames belonging to the bite scans, may be weighted higher than the position of 3D frames associated with the first or second digital 3D representation. In some embodiments, each 3D frame comprises a plurality of points in 3D space, wherein one or more points of a given 3D frame are weighted differently relative to other points of the 3D frame. In some embodiments, points and/or surfaces of a given 3D frame are classified into teeth and non-teeth, wherein teeth are weighted higher than non-teeth. In some embodiments, each point and/or vertex in the 3D frame(s) are weighted differently. In some embodiments, 3D frames are weighted based on how far the 3D frames are moved from each other. Other examples include weighting the correction of 3D frames based on difference(s) in orientation, color, or other properties such as classification of points/surfaces within the 3D frame(s).

In some embodiments, the first or second digital 3D representation is modified before performing the correction of said first and/or second digital 3D representation. The modification may comprise warping the representation, such that the first or second jaw is warped inward or outward, whereby an arch of the jaw becomes narrower or wider. As an example, the first jaw, e.g., the lower jaw, may be warped outward to provide a better starting point for the optimization. Thus, the method may comprise the step of warping the first digital 3D representation prior to the correction step, wherein the warped representation is used as an input to the correction. Previous to the step of warping the digital 3D representation, the method may comprise a step of determining a rough estimate of the error, e.g., in terms of width of the jaw, which may be used as input to the modification. Warping may be understood as distorting or deforming a given 3D representation, such as by applying one or more geometric transformations.

In some embodiments, the method further comprises the step of selecting a subset of 3D frames, wherein said subset is selected among the 3D frames associated with the first digital 3D representation, e.g., the digital representation of the lower jaw. The one or more 3D frames corrected in the correction step may comprise the selected subset of 3D frames, and the remaining 3D frames associated with the first digital 3D representation may be corrected based on the corrections performed on the selected subset of 3D frames.

Accordingly, the presently disclosed system and method provides a framework for improving the accuracy of a 3D representation by performing a global optimization in which a plurality of 3D frames of a first 3D representation are moved and/or re-registered based on the position of 3D frames belonging to the other 3D representations. As previously stated, 3D frames may be weighted differently in the optimization, e.g., 3D frames belonging to the third 3D representation may be weighted higher than 3D frames belonging to the other 3D representations. The global optimization may consider all 3D frames of all 3D representations, and as previously mentioned the 3D frames belonging to the first or second 3D representation may be static, such that they remain in their location during the optimization step. Summarizing, the method may comprise the step of acquiring or generating at least three digital 3D representations as previously mentioned, and subsequently determine if any of the 3D representations of the jaw(s) have an inaccurate dimension e.g. in terms of intermolar width. The method may then comprise the step of correcting the 3D representation having the inaccurate dimension in accordance with the description provided herein. Thereby, a more accurate 3D representation is achieved, and consequently a more accurate restoration can be designed for the patient.

### Detailed description of the drawings

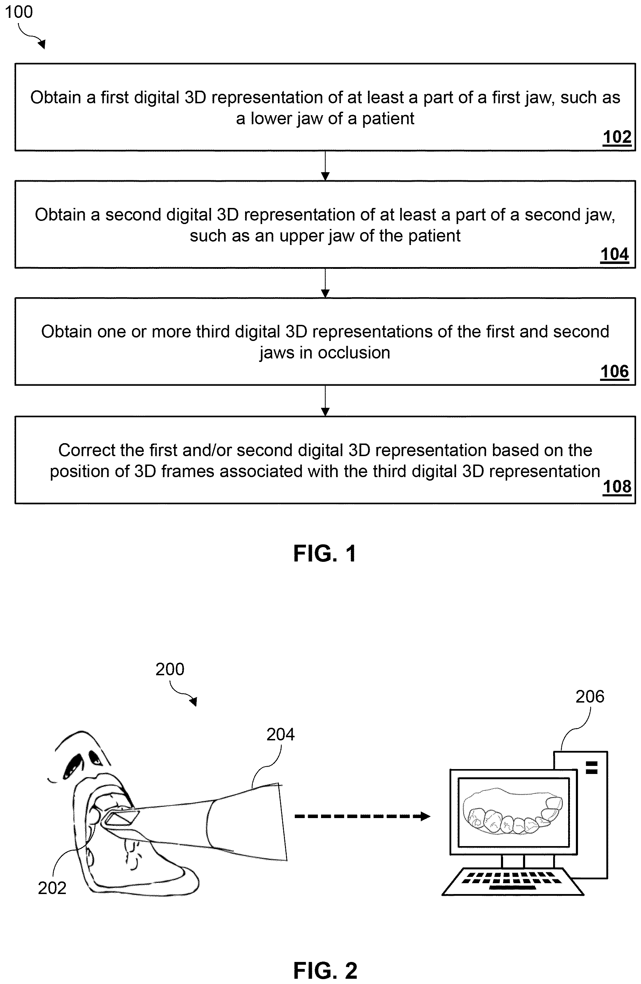

Fig. 1 shows a flowchart 100 according to an embodiment of the computer-implemented method disclosed herein. In step 102, a first digital 3D representation of at least a part of a first jaw is obtained. The first 3D representation may digitally represent a first jaw of a patient, such as a lower jaw of the patient. The first digital 3D representation may comprise a plurality of surface points. In step 104, a second digital 3D representation of at least a part of a second jaw, such as an upper jaw of the patient, is obtained. The second digital 3D representation may similarly comprise a plurality of surface points, and the second jaw may be located opposite to the first jaw. In step 106, one or more third digital 3D representations of the first and second jaws in occlusion are obtained. These third digital 3D representations may also be referred to herein as `bite scans'. The third digital 3D representation(s) may have been generated by combining several 3D frames generated for a number of different views of the jaws in occlusion, wherein each 3D frame comprises data expressing the geometry of at least a part of the jaws in occlusion. In step 108, the first and/or second digital 3D representation is corrected based on the position of the 3D frames associated with the third digital 3D representation. The correction is preferably performed based on the position of 3D frames associated with the third digital 3D representation.

Fig. 2 shows an embodiment of a 3D scanner system 200 according to the present disclosure. The 3D scanner system may be configured for generating a three-dimensional (3D) representation of an object 202, such as a dental object. As an example, the object 202 may be at least a part of the oral cavity including any of dentition, gingiva, retromolar trigone, hard palate, soft palate, and floor of the mouth, etc. In this embodiment, the 3D scanner system comprises an intraoral scanner 204 for acquiring a set of images of the scanned object, e.g. within the oral cavity of a person. The 3D scanner system further comprises one or more processors for generating a three-dimensional (3D) representation of the scanned object based on the acquired images. In general, the 3D representation may only represent a part of the object surface, e.g. captured by the field of view of the intraoral scanner 204. Such a 3D representation may also be referred to herein as a sub-scan or 3D surface. The processor(s) may be part of the 3D scanner 204, or they may be external to the intraoral scanner, or a combination of the two, i.e. such that some processing is performed on the 3D scanner, and further processing is performed on a computer system 206. The intraoral scanner may be configured to continuously, e.g., in real-time, acquire sets of images and generate one or more 3D surfaces and/or sub-scans based on said images. It may further be configured to continuously transmit, either wired or wirelessly, said sub-scans to a computer system 206. The sub-scans may be registered and stitched to each other to form a digital 3D model of the scanned object. Said 3D model may be displayed on a display, e.g. connected to the computer system.

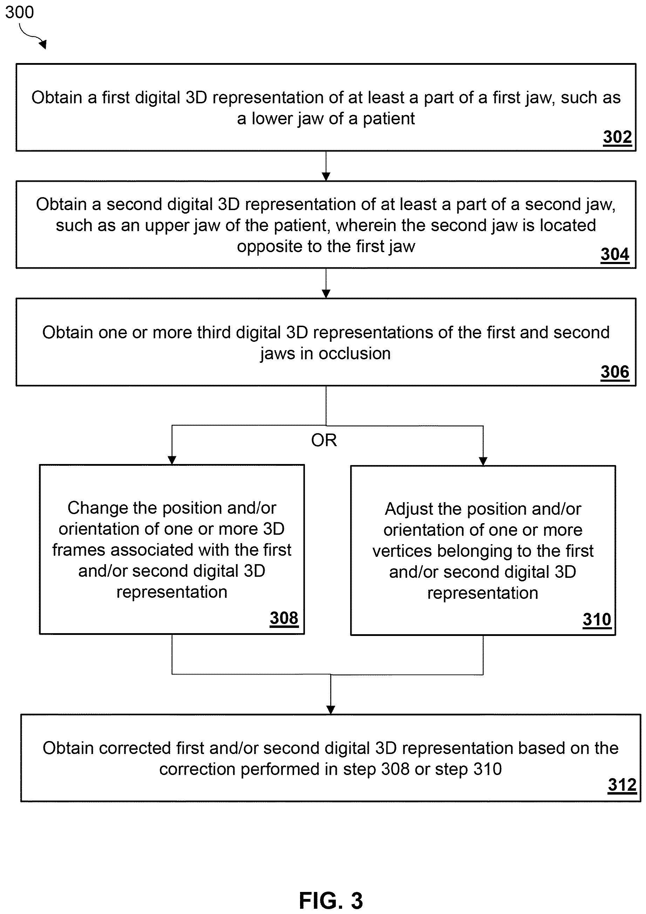

Fig. 3 shows a flowchart 300 according to an embodiment of the computer-implemented method disclosed herein. In step 302, a first digital 3D representation of at least a part of a first jaw is obtained. The first 3D representation may digitally represent a first jaw of a patient, such as a lower jaw of the patient. The first digital 3D representation may comprise a plurality of surface points. In step 304, a second digital 3D representation of at least a part of a second jaw, such as an upper jaw of the patient, is obtained. The second digital 3D representation may similarly comprise a plurality of surface points, and the second jaw may be located opposite to the first jaw. In step 306, one or more third digital 3D representations of the first and second jaws in occlusion are obtained. These third digital 3D representations may also be referred to herein as 'bite scans'. The third digital 3D representation(s) may have been generated by combining several 3D frames generated for a number of different views of the jaws in occlusion, wherein each 3D frame comprises data expressing the geometry of at least a part of the jaws in occlusion. In a next step, the first and/or second digital 3D representation is corrected based on the position of the 3D frames associated with the third digital 3D representation. The step of correcting the first and/or second digital 3D representation may be done in at least two alternatives. In a first alternative, step 308, the correction is performed by changing the position and/or orientation of one or more 3D frames associated with the first and/or second digital 3D representation. In a second alternative, step 310, the correction is performed by adjusting the position and/or orientation of one or more vertices belonging to the first and/or second digital 3D representation. In a third alternative (not shown), the step of correcting the first and/or second digital 3D representation comprises changing the position of one or more 3D surface points forming part of the first and/or second digital 3D representation. In any case, the outcome of the correction is an improved accuracy of the first and/or second digital 3D representation.

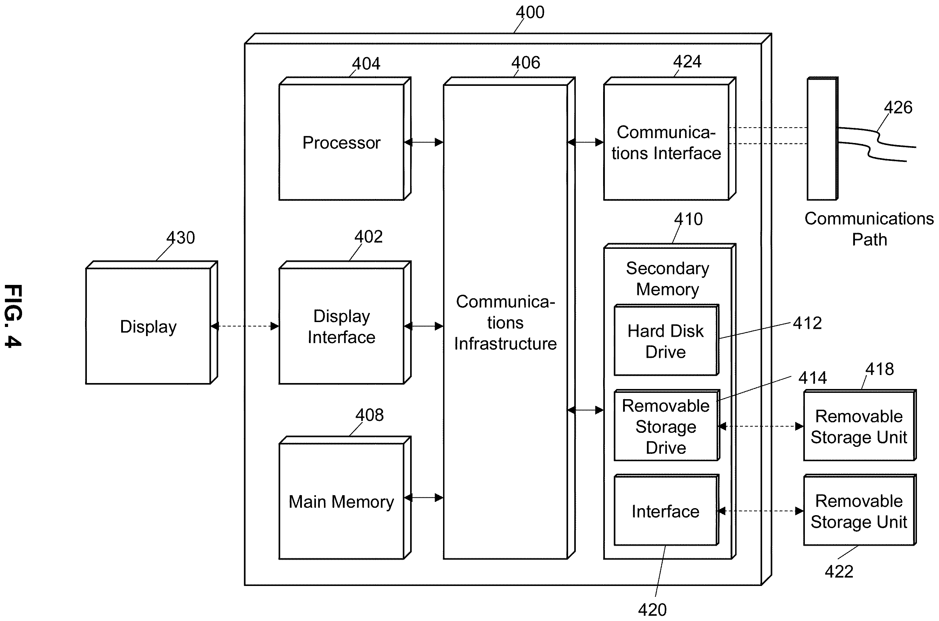

Fig. 4 shows a computer system 400 in which embodiments of the present disclosure, or portions thereof, may be implemented as computer-readable code. The computer system may encompass a number of components enabling data processing, storage, communication, and user interaction. The computer system described herein may comprise one or more processors 404, a communications interface 424, a hard disk drive 412, a removable storage drive 414, an interface 420, a main memory 408, a display interface 402, and a display 430. The one or more processor(s) 404 may be configured for executing one or more steps of the computer-implemented methods disclosed herein. The communications interface 424 may be configured to allow the computer system to communicate with external devices and networks. It may support various communication protocols, such as Ethernet, Wi-Fi, or Bluetooth, enabling the exchange of data and facilitating connectivity with other devices. The hard disk drive 412 may be configured to provide non-volatile storage for the computer system. It may store software programs, operating system files, user data, and other files in a medium, such as a magnetic medium. The hard disk drive 412 may ensure persistent storage, allowing data to be retained even when the system is powered off. The removable storage drive 414, such as a CD/DVD drive or USB port, may be configured to provide the capability of the computer system to read from and/or write to a removable storage unit 418. This allows users to access external storage devices, such as optical discs or USB flash drives, and transfer data to and from the computer system. The interface 420 may be configured to connect various external devices, such as keyboards, mice, printers, scanners, or audio devices, to the computer system.

### Further details of the invention

1. A computer-implemented method for improving the accuracy of a three-dimensional (3D) A computer-implemented method for improving the accuracy of a three-dimensional (3D) representation of a jaw, the method comprising the steps of:
   - obtaining a first digital 3D representation of at least a part of a first jaw, such as a lower jaw of a patient, wherein the first digital 3D representation comprises a plurality of surface points and/or a plurality vertices;
   - obtaining a second digital 3D representation of at least a part of a second jaw, such as an upper jaw of the patient, wherein the second digital 3D representation comprises a plurality of surface points and/or one or more vertices, wherein the second jaw is located opposite to the first jaw;
   - obtaining one or more third digital 3D representations of the first and second jaws in occlusion, wherein the third digital 3D representation(s) have been generated by combining several 3D frames generated for a number of different views of the jaws in occlusion, wherein each 3D frame comprises data expressing the geometry of at least a part of the jaws in occlusion; and
   - correcting the first digital 3D representation by adjusting the position and/or orientation of one or more surface points and/or vertices belonging to the first digital 3D representation relative to other surface points and/or vertices belonging to the first digital 3D representation;
   wherein the correction is performed based on the position of 3D frames associated with the third digital 3D representation, whereby the accuracy of the first digital 3D representation is improved.
2. The method according to item 1, wherein the second digital 3D representation is static, such that 3D frames associated with the second digital 3D representation are fixed in space.
3. The method according to any of the preceding items, wherein a plurality of 3D frames associated with the first digital 3D representation are corrected based on the position of 3D frames associated with the third digital 3D representation.
4. The method according to any of the preceding items, wherein all 3D frames associated with the first digital 3D representation are corrected based on the position of 3D frames associated with the third digital 3D representation.
5. The method according to any of the preceding items, wherein all 3D frames associated with the first digital 3D representation are considered for correction.
6. The method according to any of the preceding items, wherein the position and/or orientation of the one or more 3D frames is changed in accordance with a Euclidean transformation.
7. The method according to any of the preceding items, wherein the position and/or orientation of the one or more vertices is adjusted in accordance with a Euclidean transformation.
8. The method according to any of the preceding items, wherein the position and/or correction of 3D frames from different 3D representations are weighted differently when performing the correction of the first digital 3D representation.
9. The method according to any of the preceding items, wherein each 3D frame comprises a plurality of points in 3D space.
10. The method according to any of the preceding items, wherein the step of correcting the first and/or second digital 3D representation comprises changing the position of one or more 3D surface points forming part of the first and/or second digital 3D representation.
11. The method according to item 9-10, wherein one or more points of a given 3D frame are weighted differently relative to other points of the 3D frame.
12. The method according to any of the items 9-11, wherein points and/or surfaces of a given 3D frame are classified into rigid material, such as teeth and/or implants, and soft tissue, such as gingiva.
13. The method according to item 12, wherein rigid material is weighted higher than soft tissue in the correction.
14. The method according to any of the items 9-13, wherein points and/or surfaces of a given 3D frame are classified into teeth and non-teeth.
15. The method according to item 14, wherein teeth are weighted higher than non-teeth in the correction.
16. The method according to any of the preceding items, wherein the first or second digital 3D representation is modified before performing the correction of said first and/or second digital 3D representation.
17. The method according to item 16, wherein the modification comprises warping the representation, such that the first or second jaw is warped inward or outward, whereby an arch of the jaw becomes narrower or wider.
18. The method according to any of the preceding items, wherein the position of 3D frames associated with the third digital 3D representation are weighted higher than the position of 3D frames associated with the first digital 3D representation.
19. The method according to any of the preceding items, wherein the method further comprises the step of warping the first digital 3D representation prior to the correction step, wherein the warped representation is used as an input to the correction.
20. The method according to any of the preceding items, wherein the method further comprises the step of selecting a subset of 3D frames, wherein said subset is selected among the 3D frames associated with the first digital 3D representation.
21. The method according to item 20, wherein the one or more 3D frames corrected in the correction step comprise the selected subset of 3D frames.
22. The method according to item 21, wherein remaining 3D frames associated with the first digital 3D representation are corrected based on the corrections performed on the selected subset of 3D frames.
23. The method according to any of the preceding items, wherein the first jaw is the lower jaw of a patient, and the second jaw is the upper jaw of the patient.
24. The method according to any of the preceding items, wherein the first digital 3D representation of the first jaw is inaccurate, e.g. wherein the width of the digitally represented first jaw is narrower than the first jaw of the patient.
25. The method according to any of the preceding items, wherein the width of the first digital 3D representation of the first jaw is corrected based on the third digital 3D representations of the first and second jaws in occlusion.
26. A computer program product comprising instructions which, when the program is executed by a computer, cause the computer to carry out the steps of the method according to any of the items 1-25.
27. A computer-readable storage medium comprising instructions which, when executed by a computer, cause the computer to carry out the steps of the method according to any of the items 1-25.
28. A computer-readable data carrier having stored thereon the computer program product of item 26.
29. A 3D scanner system for correcting a three-dimensional (3D) representation of a jaw, the scanner system comprising one or more processors configured for carrying out the steps of the method according to any of the items 1-25.
30. The 3D scanner system according to item 29, wherein the scanner system further comprises an intraoral scanner.

Although some embodiments have been described and shown in detail, the disclosure is not restricted to such details, but may also be embodied in other ways within the scope of the subject matter defined in the following claims. In particular, it is to be understood that other embodiments may be utilized, and structural and functional modifications may be made without departing from the scope of the present disclosure. Furthermore, the skilled person would find it apparent that unless an embodiment is specifically presented only as an alternative, different disclosed embodiments may be combined to achieve a specific implementation and such specific implementation is within the scope of the disclosure.

Any one or more of the first, second, and/or third digital 3D representations may be obtained during a scanning session using an intraoral scanner, or they may be obtained from a database. Thus, in accordance with some embodiments, all of the steps of the computer-implemented method can be carried out by the disclosed 3D scanner system or a computer system comprising one or more processors. Accordingly, in some cases, it is not necessary that the 3D scanner system comprises an intraoral scanner for obtaining the 3D representations, since the scanner system may retrieve or obtain the representations from an internal or external database.

## Claims

1. A computer-implemented method for improving the accuracy of a three-dimensional (3D) representation of a jaw, the method comprising the steps of:
- obtaining a first digital 3D representation of at least a part of a first jaw, such as a lower jaw of a patient, wherein the first digital 3D representation comprises a plurality of surface points and/or a plurality vertices;
- obtaining a second digital 3D representation of at least a part of a second jaw, such as an upper jaw of the patient, wherein the second digital 3D representation comprises a plurality of surface points and/or one or more vertices, wherein the second jaw is located opposite to the first jaw;
- obtaining one or more third digital 3D representations of the first and second jaws in occlusion, wherein the third digital 3D representation(s) have been generated by combining several 3D frames generated for a number of different views of the jaws in occlusion, wherein each 3D frame comprises data expressing the geometry of at least a part of the jaws in occlusion; and
- correcting the first digital 3D representation by adjusting the position and/or orientation of one or more surface points and/or vertices belonging to the first digital 3D representation relative to other surface points and/or vertices belonging to the first digital 3D representation;
wherein the correction is performed based on the position of 3D frames associated with the third digital 3D representation, whereby the accuracy of the first digital 3D representation is improved.

2. The method according to claim 1, wherein the second digital 3D representation is static, such that 3D frames associated with the second digital 3D representation are fixed in space.

3. The method according to any of the preceding claims, wherein a plurality of 3D frames associated with the first digital 3D representation are corrected based on the position of 3D frames associated with the third digital 3D representation.

4. The method according to any of the preceding claims, wherein the position and/or correction of 3D frames from different 3D representations are weighted differently when performing the correction of the first digital 3D representation.

5. The method according to any of the preceding claims, wherein the position of 3D frames associated with the third digital 3D representation(s) are weighted higher than the position of 3D frames associated with the second digital 3D representation.

6. The method according to any of the preceding claims, wherein the step of correcting the first digital 3D representation comprises changing the position of one or more 3D surface points forming part of the first digital 3D representation.

7. The method according to any of the preceding claims, wherein each 3D frame comprises a plurality of points in 3D space, and wherein one or more points of a given 3D frame are weighted differently relative to other points of the 3D frame.

8. The method according to any of the preceding claims, wherein points and/or surfaces of a given 3D frame are classified into rigid material and soft tissue, and wherein rigid material is weighted higher than soft tissue in the correction.

9. The method according to any of the preceding claims, wherein the first digital 3D representation is modified before performing the correction, wherein the modification comprises warping the first representation, such that the first jaw is digitally warped outward, whereby an arch of the jaw becomes wider.

10. A 3D scanner system for correcting a three-dimensional (3D) representation of a jaw, the scanner system comprising one or more processors configured for carrying out the steps of the method according to any of the preceding claims.
